# EUROPEAN PATENT APPLICATION

(11) **EP 4 317 113 A1**
(43) Date of publication of application: **07.02.2024**
(21) Application number: 21950811.6
(22) Date of filing: 29.11.2021
(51) Int. Cl.: C04B 38/08, C04B 38/06, C04B 35/14, C04B 35/64, A24F 47/00, A24F 40/46, A24F 40/40

(54) **MICROPOROUS CERAMIC ATOMIZATION CORE AND PREPARATION METHOD THEREFOR**

(30) Priority: 21.07.2021 CN 202110827486
(71) Applicant: Shenzhen Huachengda Precision Industry Co., Ltd., Shenzhen, Guangdong 518000 (CN)
(72) Inventor: CHEN, Ping, Shenzhen, Guangdong 518000 (CN)
(74) Representative: Westphal, Mussgnug & Partner, Patentanwälte mbB
(86) International application number: PCT/CN2021/133939
(87) International publication number: WO 2023/000573

(57) **Abstract**

Disclosed in the present invention are a microporous ceramic atomization core and a preparation method therefor. The microporous atomization core comprises the following raw materials in parts by mass: 10-50 parts of a main material, 0-40 parts of a ceramic powder, 10-50 parts of a sintering aid, 0-20 parts of a pore-forming agent, 20-50 parts of paraffin, and 0.1-2.0 parts of a surfactant, wherein the main material comprises at least one of diatomite, a silica aerogel powder and porous boron nitride, and the main material has a particle size of 200-1500 meshes. The microporous ceramic atomization core of the present invention improves the porosity and liquid locking capacity of the atomization core by adding the main material having micropores and a high specific surface area, ensures the full atomization of an atomization liquid, and enhances the use experience of the atomization core.

## Description

### FIELD

The invention relates to the technical field of atomization, in particular to a microporous ceramic atomizing core and a method for preparing the microporous ceramic atomizing core.

### BACKGROUND

Ceramic atomizing core is the core component in the atomization field such as electronic cigarette, with the development of the field, people's requirements for ceramic atomizing core is not only atomization, its atomizing effect has also become an important indicator to evaluate the atomizing core.

The current ceramic atomizing core has major problems such as large atomized particles, leakage of liquid during use or delivery, and shrinkage and deformation of the atomizing core due to high-temperature sintering, which greatly limits the development of ceramic atomizing core.

### SUMMARY

The technical issue to be addressed by the invention is to provide a microporous ceramic atomizing core with high porosity and improved atomization effect, and a method for preparing the microporous ceramic atomizing core.

The technical solution adopted by the invention to solve the above technical issue is to provide a microporous ceramic atomizing core including raw materials in parts by mass as follows: 10 to 50 parts by mass of main material, 0 to 40 parts by mass of ceramic powder, 10 to 50 parts by mass of sintering aid, 0 to 20 parts by mass of pore-forming agent, 20 to 50 parts by mass of paraffin, and 0.1 to 2.0 parts by mass of surfactant;

Wherein the main material includes at least one of diatomite, silicon dioxide aerogel powder and porous boron nitride, and the main material has a particle size of 200 mesh- 1500 mesh.

Preferably, the ceramic powder includes at least one of quartz sand, silicon nitride, silicon powder and corundum, with a particle size of 100 mesh-1500 mesh.

Preferably, the sintering aid is a metal oxide or a glass powder, with a particle size of 200 mesh- 2000 mesh, and an initial melting temperature of 300°C-600°C.

Preferably, the metal oxide is at least one of magnesium oxide, titanium dioxide, and niobium oxide.

Preferably, the glass powder is a non-lead-based low-temperature molten glass powder, a rare element-based low-temperature molten glass powder, or a boron-based low-melting point glass powder.

Preferably, the pore-forming agent includes at least one of wheat flour, PS microspheres and grain husk powder, with a particle size of 200 mesh-1000 mesh.

Preferably,the paraffin is a semi-refined or refined paraffin with a melting point of 40°C-100°C.

Preferably,the surfactant includes at least one of dehydrated sorbitol fatty acid ester, polysorbate and oleic acid.

A method for preparing a microporous atomizing core including the following steps:
S1, mixing the raw materials in parts by mass, and pressing to form a blank;
S2, placing the blank into a sintering furnace and sintering at a temperature of 500°C-800°C.

The invention has at least the following beneficial effects: the porosity and liquid locking capacity of the atomizing core are improved by the addition of the main material with micropores and a high specific surface area, which ensures the sufficient atomization of the atomized liquid and strengthens the use experience of the atomizing core.

In the preparation, sintering and molding are performed at a low temperature (500°C-800°C), and preparation conditions are simple and easy to implement.

### BRIEF DESCRIPTION OF THE DRAWINGS

The present invention will be further described in the following, in conjunction with the accompanying drawings and embodiments. In the drawings:
FIG. 1 is a SEM image of the diatomite of the present invention;
FIG. 2 is a SEM image of the microporous ceramic atomizing core of the present invention.

### DETAILED DESCRIPTION

For a better understanding of the technical features, purposes and effects of the invention, the specific implementations of the invention are described in detail with reference to the accompanying drawings.

The microporous ceramic atomizing core of the present invention includes raw materials in parts by mass as follows: 10 to 50 parts by mass of main material, 0 to 40 parts by mass of ceramic powder, 10 to 50 parts by mass of sintering aid, 10 to 20 parts by mass of pore-forming agent, 20 to 50 parts by mass of paraffin, and 0.1 to 2.0 parts by mass of surfactant.

The main material is a material with micropores and a high specific surface area, which may improve the liquid locking effect and make the atomized particles fine in the atomizing core. The main material includes at least one of diatomite, silicon dioxide aerogel powder and porous boron nitride, and the main material has a particle size of 200 mesh- 1500 mesh.

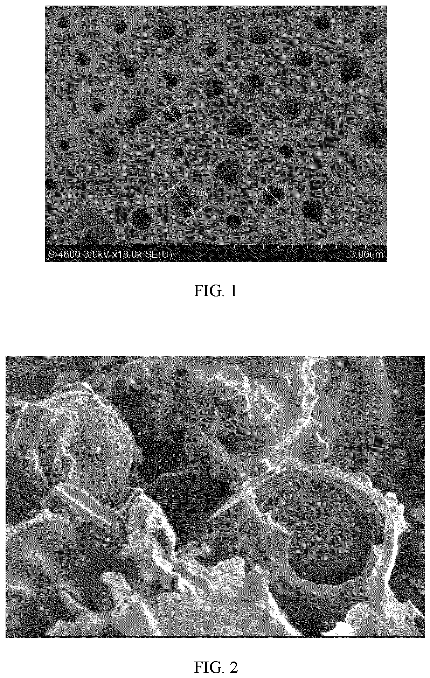

Among the main materials, diatomite, the main component of which is silicate, has countless micropores on its surface, which has the advantages of strong adsorption performance, light volumetric weight, uniform fineness, neutral pH value and non-toxicity, and good mixing uniformity. The SEM image of diatomite is shown in Fig. 1, and from the microscopic morphology characterization of diatomite powder particles shown in the figure, it can be seen that diatomite is distributed with uniform micropores and has a large specific surface area.

Silicon dioxide aerogel powder is an aerogel material with low density, low thermal conductivity, high specific surface area and high adsorption performance prepared by atmospheric drying method. Porous boron nitride is a new type of non-oxide porous material, which is formed by interpenetrating or closed pores inside, with high specific surface area and rich pore structure, and the pore size may be adjusted according to practical application.

The ceramic powder serves as a framework material for the microporous ceramic atomizing core, and may includes at least one of quartz sand, silicon nitride, silicon powder and corundum. The exemplary particle size of ceramic powder is 100 mesh-1500 mesh.

The sintering aid is a metal oxide or a glass powder, with a particle size of 200 mesh-2000 mesh and an initial melting temperature of 300°C-600°C. The metal oxide may be at least one of magnesium oxide, titanium dioxide, and niobium oxide. The glass powder may be a non-lead based low-temperature molten glass powder, a rare element based low-temperature molten glass powder, or a boron based low-melting-point glass powder.

The pore-forming agent includes at least one of wheat flour, PS microspheres and grain husk powder, with a particle size of 200 mesh-1000 mesh.

The paraffin is a semi-refined or refined paraffin with a melting point of 40°C-100°C.

The surfactant includes at least one of dehydrated sorbitol fatty acid ester (Span), polysorbate (Tween) and oleic acid.

The method for preparing a microporous atomizing core of the present invention includes the following steps:
S1, mixing the raw materials in parts by mass, and pressing to form a blank.

For press molding, either hot pressing or dry pressing may be used.

S2, placing the blank into a sintering furnace and sintering at a temperature of 500°C-800°C to obtain the microporous atomizing core in a single sintering .

It is to be understood that the method of preparing the microporous ceramic atomizing core of the present invention is not limited to hot pressing or dry pressing as described above, and that other methods of preparing the atomizing core by molding may be used.

The SEM image of the microporous ceramic atomizing core of the present invention is shown in Fig. 2, from which it can be seen that, in addition to the pores formed by the particle accumulation and the pore-forming agent, the addition of the main material substantially increases the micropores in the atomizing core, which greatly improves the capillary effect of the microporous atomizing core while ensuring the liquid inlet, and greatly enhances liquid storage and liquid locking capacity, so as to ensure the sufficient liquid supply when the atomizer is working and to make the atomized particles fine.

The present invention will be further described below by way of specific embodiments.

### Embodiment 1

The raw materials in parts by mass are as follows: 80 parts by mass of diatomite, 50 parts by mass of glass powder, 50 parts by mass of paraffin, 0.5 parts by mass of oleic acid. The above raw materials are mixed and subjected to perform hot pressing, and are sintered once at 500°C-800°C to form a microporous atomizing core.

### Embodiment 2

Diatomite is replaced by silicon dioxide aerogel powder, and the rest is the same as in Embodiment 1.

### Embodiment 3

Diatomite is replaced by porous boron nitride, and the rest is the same as in Embodiment 1.

### Embodiment 4

10 parts by mass of wheat flour are added as the raw materials on the basis of Embodiment 1, and the rest is the same as in Embodiment 1.

### Embodiment 5

20 parts by mass of wheat flour are added as the raw materials on the basis of Embodiment 1, and the rest is the same as in Embodiment 1.

### Embodiment 6

The raw materials in parts by mass are as follows: 40 parts by mass of diatomite, 10 parts by mass of silicon powder, 50 parts by mass of glass powder, 20 parts by mass of wheat flour, 40 parts by mass of paraffin, 0.5 parts by mass of oleic acid. The above raw materials are mixed and subjected to perform hot pressing, and are sintered once at 500°C-800°C to form a microporous atomizing core.

### Embodiment 7

The raw materials in parts by mass are as follows: 40 parts by mass of diatomite, 20 parts by mass of silicon powder, 40 parts by mass of glass powder, 20 parts by mass of wheat flour, 40 parts by mass of paraffin, 0.5 parts by mass of oleic acid. The above raw materials are mixed and subjected to perform hot pressing, and are sintered once at 500°C-800°C to form a microporous atomizing core.

### Embodiment 8

The raw materials in parts by mass are as follows: 40 parts by mass of diatomite, 20 parts by mass of quartz sand, 40 parts by mass of glass powder, 20 parts by mass of wheat flour, 40 parts by mass of paraffin, 0.5 parts by mass of oleic acid. The above raw materials are mixed and subjected to perform hot pressing, and are sintered once at 500°C-800°C to form a microporous atomizing core.

### Embodiment 9

The raw materials in parts by mass are as follows: 40 parts by mass of diatomite, 20 parts by mass of corundum, 40 parts by mass of glass powder, 20 parts by mass of wheat flour, 40 parts by mass of paraffin, 0.5 parts by mass of oleic acid. The above raw materials are mixed and subjected to perform hot pressing, and are sintered once at 500°C-800°C to form a microporous atomizing core.

### Embodiment 10

The raw materials in parts by mass are as follows: 40 parts by mass of silicon dioxide aerogel, 20 parts by mass of silicon powder, 40 parts by mass of glass powder, 20 parts by mass of wheat flour, 40 parts by mass of paraffin, 0.5 parts by mass of oleic acid. The above raw materials are mixed and subjected to perform hot pressing, and are sintered once at 500°C-800°C to form a microporous atomizing core.

### Embodiment 11

The raw materials in parts by mass are as follows: 40 parts by mass of porous boron nitride, 20 parts by mass of silicon powder, 40 parts by mass of glass powder, 20 parts by mass of wheat flour, 40 parts by mass of paraffin, 0.5 parts by mass of oleic acid. The above raw materials are mixed and subjected to perform hot pressing, and are sintered once at 500°C-800°C to form a microporous atomizing core.

### Comparative Embodiment 1

The raw materials in parts by mass are as follows: 70 parts by mass of corundum powder, 30 parts by mass of glass powder, 20 parts by mass of wheat flour, 30 parts by mass of paraffin, 0.5 parts by mass of oleic acid. The above raw materials are mixed and subjected to perform hot pressing, and are sintered once at 500°C-800°C to form a microporous atomizing core.

### Comparative Embodiment 2

The raw materials in parts by mass are as follows: 70 parts by mass of quartz sand, 30 parts by mass of glass powder, 20 parts by mass of wheat flour, 30 parts by mass of paraffin, 0.5 parts by mass of oleic acid. The above raw materials are mixed and subjected to perform hot pressing, and are sintered once at 500°C-800°C to form a microporous atomizing core.

The porosity (Archimedes drainage method) and water absorption of the microporous atomizing cores prepared in Embodiments 1-11 and Comparative Embodiments 1-2 were tested, and the test results are shown in Table 1 below.

**Table 1**

| Embodiments | Porosity/% | Water absorption/% | Average pore size/um |
|---|---|---|---|
| Embodiment 1 | 56 | 55 | 7.0032 |
| Embodiment 2 | 55 | 56 | 8.0523 |
| Embodiment 3 | 52 | 55 | 7.6628 |
| Embodiment 4 | 58 | 59 | 8.2216 |
| Embodiment 5 | 63 | 72 | 13.6496 |
| Embodiment 6 | 58 | 60 | 14.2363 |
| Embodiment 7 | 60 | 60 | 16.7973 |
| Embodiment 8 | 59 | 59 | 15.3656 |
| Embodiment 9 | 59 | 62 | 16.3326 |
| Embodiment 10 | 60 | 59 | 12.3362 |
| Embodiment 11 | 58 | 58 | 13.7986 |
| Comparative Embodiment 1 | 50 | 43 | 30.6536 |
| Comparative Embodiment 2 | 52 | 47 | 32.3750 |

As can be seen from the results in Table 1, compared with the comparative embodiments of the atomizing core with smaller porosity, larger pore size, lower liquid storage capacity of the atomizing core and easily occurring liquid leakage and other problems, in the present invention, the addition of diatomite and other main materials significantly increases the porosity of the microporous atomizing core, and the average pore size can be maintained at a relatively stable and small level, ensuring that the atomizing core has a better liquid locking capacity.

The above are only embodiments of the present invention and do not limit the scope of the present invention. Any equivalent structure or equivalent process transformation made based on the content of the specification and the accompanying drawings of the present invention, or direct or indirect application in other related technical fields, fall equally within the patent scope of the present invention.

## Claims

1. A microporous atomizing core, **characterized in** comprising raw materials in parts by mass as follows: 10 to 50 parts by mass of main material, 0 to 40 parts by mass of ceramic powder, 10 to 50 parts by mass of sintering aid, 0 to 20 parts by mass of pore-forming agent, 20 to 50 parts by mass of paraffin, and 0.1 to 2.0 parts by mass of surfactant;
wherein the main material comprises at least one of diatomite, silicon dioxide aerogel powder and porous boron nitride, and the main material has a particle size of 200 mesh- 1500 mesh.

2. The microporous atomizing core according to claim 1, **characterized in that** the ceramic powder comprises at least one of quartz sand, silicon nitride, silicon powder and corundum, with a particle size of 100 mesh-1500 mesh.

3. The microporous atomizing core according to claim 1, **characterized in that** the sintering aid is a metal oxide or a glass powder, with a particle size of 200 mesh- 2000 mesh, and an initial melting temperature of 300°C-600°C.

4. The microporous atomizing core according to claim 3, **characterized in that** the metal oxide is at least one of magnesium oxide, titanium dioxide, and niobium oxide.

5. The microporous atomizing core according to claim 3, **characterized in that** the glass powder is a non-lead-based low-temperature molten glass powder, a rare element-based low-temperature molten glass powder, or a boron-based low-melting point glass powder.

6. The microporous atomizing core according to claim 1, **characterized in that** the pore-forming agent comprises at least one of wheat flour, PS microspheres and grain husk powder, with a particle size of 200 mesh-1000 mesh.

7. The microporous atomizing core according to claim 1, **characterized in that** the paraffin is a semi-refined or refined paraffin with a melting point of 40°C-100°C.

8. The microporous atomizing core according to claim 1, **characterized in that** the surfactant comprises at least one of dehydrated sorbitol fatty acid ester, polysorbate and oleic acid.

9. A method for preparing a microporous atomizing core according to any one of claims 1-8, **characterized in** comprising the following steps:
S1, mixing the raw materials in parts by mass, and pressing to form a blank;
S2, placing the blank into a sintering furnace and sintering at a temperature of 500°C-800°C.
